Europäisches Patentamt

European Patent Office

Office européen des brevets

(11) Veröffentlichungsnummer: **0 555 701 A1**

## (12) EUROPÄISCHE PATENTANMELDUNG

(21) Anmeldenummer: 93101296.7

(22) Anmeldetag: 28.01.93

(51) Int. Cl.5: **H02P 1/44**

(30) Priorität: 14.02.92 DE 4204323
09.05.92 DE 4215266

(43) Veröffentlichungstag der Anmeldung:
18.08.93 Patentblatt 93/33

(84) Benannte Vertragsstaaten:
DE FR GB IT

(71) Anmelder: **GRUNDFOS A/S**
**Poul Due Jensens Vej 7-11**
**DK-8850 Bjerringbro(DK)**

(72) Erfinder: **Jensen, Niels Due**
**Pilevej 1**
**DK-8850 Bjerringbro(DK)**
Erfinder: **Daugbjerg, Jorgen**
**Karmark Skovvej nr. 6**
**DK-8860 Ulstrup(DK)**

(74) Vertreter: **Vollmann, Heiko, Dipl.-Ing.**
**Patentanwälte Wilcken & Vollmann,**
**Musterbahn 1**
**D-23552 Lübeck (DE)**

(54) **Kreiselpumpenaggregat.**

(57) Das Kreiselpumpenaggregat weist einen Spaltrohrmotor in Form eines Einphasen-Induktionsmotors mit mindestens einer Arbeitswicklung 5 und einer Anlaufwicklung 1, 2 auf. Zum Zwecke des Deblockierens des Rotors ist ein Gleichrichterelement 8 vorgesehen, das mit mindestens einem Teil einer Wicklung parallel oder in Reihe schaltbar ist.

FIG. 1

Die Erfindung betrifft ein Verfahren zum Deblockieren des Rotors eines Einphasen-Induktionsmotors eines Kreiselpumpenaggregates sowie ein entsprechend dafür ausgebildetes Kreiselpumpenaggregat gemäß den im Oberbegriff des Anspruchs 5 angegebenen Merkmalen.

Kreiselpumpenaggregate dieser Art werden, wenn sie mit Naßlaufmotoren ausgerüstet sind, vorwiegend als Umwälzpumpen in Heizungs- und Brauchwasseranlagen eingesetzt. Da die Antriebsleistung der weitaus größten Zahl dieser Aggregate typischerweise unter 100 Watt liegt, haben die Motoren ein sehr kleines Anlaufdrehmoment. Sowohl in geschlossenen Systemen, wie beispielsweise Heizungsanlagen, als auch in offenen Systemen ist stets mit Verunreinigungen des Förderfluids zu rechnen, seien es Schmutzpartikel, ausgefallene Kalkpartikel oder andere Schwebstoffe. Gelangen derartige Partikel in das Kreiselpumpenaggregat, so bleibt dies in der Regel so lange unproblematisch, wie das Aggregat in Betrieb gehalten wird. Kommt es jedoch - aus welchen Gründen auch immer - zum Stillstand des Pumpenaggregats, so führen die sich dann innerhalb des Aggregats befindlichen Partikel häufig zum Festsetzen, d.h., Blockieren des Rotors, so daß beim Wiedereinschalten des Aggregates der Rotor stehenbleibt. Ursache dieses Blockierens des Rotors sind Feststoffpartikel des Förderstroms oder Kalkablagerungen auf der Rotorwelle, die durch die beim Ausschalten bedingte Axialbewegung des Rotors in die Lagerspalte gezogen werden. Da man heutzutage die Lagerspiele aus Gründen der Geräuschentwicklung möglichst klein hält, können schon winzige Partikel das Reibmoment innerhalb des Lagers so weit vergrößern, daß das Anlaufdrehmoment des Motors nicht ausreicht, um diesen in Bewegung zu setzen.

Eine typische Pumpe der vorbeschriebenen Art ist beispielsweise aus DE 32 10 761 C1 bekannt. In dieser Druckschrift ist das vorerwähnte Problem ebenfalls geschildert. Zur Lösung dieses Problems weist das dort beschriebene Pumpenaggregat - wie nahezu alle Pumpenaggregate dieser Art - eine Öffnung im Boden des Spaltrohrtopfes sowie des Pumpengehäuses auf, die mittels eines Stopfens verschließbar ist. Durch diese Öffnung ist das motorseitige Ende der Rotorwelle nach Entfernen des Stopfens frei zugänglich. Über diese Öffnung kann ein Schraubendreher eingeführt werden, der in eine an der Stirnseite der Rotorwelle vorgesehene Nut eingesetzt wird, um so von außen ein erhöhtes Drehmoment auf die Welle aufzubringen und das Aggregat zu deblockieren.

Dieses manuelle Deblockieren führt zwar in der Regel zum gewünschten Erfolg, weist jedoch zahlreiche Nachteile auf. Ein solches manuelles Deblockieren ist nämlich nicht nur zeitaufwendig, sondern es sollte auch ausschließlich durch geschultes Fachpersonal durchgeführt werden, was in der Regel zu weiteren zeitlichen Verzögerungen und erhöhten Kosten führt, sei es durch Stillstand der entsprechenden Anlage oder Reparaturkosten zur Beseitigung des Blockierens.

Doch selbst der Fachmann ist bei den vorbeschriebenen Tätigkeiten zum Deblockieren der Pumpe teilweise in hohem Maße gefährdet. Durch das Entfernen des Stopfens wird das normalerweise geschlossene und unter Druck stehende wasserführende System geöffnet, so daß unter Umständen sehr heißes Wasser durch den Lagerspalt unter Druck in die Umgebung austritt.

Neben diesem latenten Gefahrenpotential sind als weitere Nachteile zu erwähnen, daß bei heute üblichen modernen Heizungs- und Brauchwasseranlagen beispielsweise drei derartige Pumpenaggregate in einer Anlage integriert sind, die durch die Regelung bzw. Steuerung der Anlage selbsttätig ein- bzw. abgeschaltet werden. Hier ist die Gefahr des Blockierens und des Ausfalls der gesamten Anlage schon aufgrund der Einschalthäufigkeit besonders groß.

Weiterhin ist es konstruktiv nachteilig, eine zuverlässig verschließbare Öffnung im Boden des Spaltrohrtopfes sowie dazu fluchtend im Gehäuse vorzusehen. Hier sind zusätzliche Bearbeitungsgänge und Bauteile (Stopfen, Dichtung etc.) erforderlich. Auch begrenzt die erforderliche Zugänglichkeit der Öffnung die Einbaulage, was insbesondere bei kompakten Heizungsanlagen von Nachteil ist.

Ausgehend von diesem Stand der Technik liegt der Erfindung die Aufgabe zugrunde, ein Verfahren zum Deblockieren des Rotors zu schaffen, das die vorerwähnten Nachteile vermeidet, insbesondere ohne den vorerwähnten manuellen Eingriff auskommt und auch extern angesteuert oder in automatische Steuerungen oder Regelungen eingegliedert werden kann. Weiterhin soll ausgehend von diesem Stand der Technik ein Kreiselpumpenaggregat der eingangs erwähnten Art zur Anwendung des erfindungsgemäßen Verfahrens ausgebildet werden.

Der verfahrensmäßige Teil dieser Aufgabe wird dadurch gelöst, daß der Elektromotor des Pumpenaggregats während der Deblockierungsphase, also zum Zwecke der Deblockierung, zur Erzeugung eines erhöhten und/oder in seiner Rrichtung sich ändernden Drehmoments elektrisch angesteuert wird. In vorteilhafter Weise wird hier also ein ohnehin vorhandenes Bauteil, nämlich der Elektromotor zur Deblockierung des Aggregats genutzt, indem er so angesteuert wird, daß sich ein erhöhtes Drehmoment ergibt, das sich zusätzlich oder alternativ auch in seiner Drehrichtung ändern kann.

Ein erhöhtes Drehmoment zum Deblockieren des Aggregats kann vorteilhaft dadurch erzeugt werden, daß während der Deblockierungsphase mindestens ein Teil der Motorwicklung mit einer sich zeitlich ändernden Spannung beaufschlagt wird, deren während einer Schwingungsperiode (der Versorgungsspannung) gebildeter Mittelwert ungleich Null ist. Dies kann auf verschiedenste Arten erreicht werden, beispielsweise dadurch, daß die Spannungsversorgung über Bruchteile der Periode unterbrochen, die Nullinie der Versorgungsspannung verschoben oder der Mittelwert der Spannung in anderer Weise verändert wird. Es versteht sich, daß gemäß der Erfindung der Motor während der Deblockierungsphase mit einer Spannung angesteuert wird, deren zeitlicher Mittelwert bewußt ungleich Null gesteuert wird. Die durch Ungleichmäßigkeiten innerhalb des Versorgungsnetzes üblicherweise vorhandenen Schwankungen, die bei genauer Betrachtung ebenfalls zu einem Spannungsmittelwert ungleich Null führen, sind vernachlässigbar und reichen für diese gezielte Motorsteuerung nicht aus.

Eine bevorzugte Lösung zur entsprechenden Ansteuerung des Elektromotors besteht darin, daß mindestens einem Teil einer Motorwicklung ein Wechselstrom zugeführt wird, dessen negative oder positive Halbwellen zeitweise herausgefiltert oder in anderer Weise unterdrückt sind. Dies kann beispielsweise durch Einschaltung eines Gleichrichterelements in eine Wicklung oder einen Teil einer Wicklung erfolgen. Dieses Gleichrichterelement wird zum Zwecke des Deblockierens aktiv geschaltet, dies kann beispielsweise für eine vorbestimmte Zeit nach jedem Einschalten des Aggregates oder aber auch durch eine gesonderte Schalterstellung oder Steuerung erfolgen. Es versteht sich, daß dieses Verfahren ohne weiteres in vollautomatische Ablaufsteuerungen integriert werden kann, wobei dann entsprechende Sensorik zur Ermittlung des Pumpenbetriebszustandes erforderlich sein kann.

Das erfindungsgemäße Verfahren ermöglicht somit ein Deblockieren des Aggregates ohne äußeren Eingriff. Dies hat konstruktiv den Vorteil, daß auch die bisher regelmäßig vorgesehene Öffnung im Spaltrohrtopf und in der Gehäusestirnwand mit Verschlußstopfen etc. vollständig entfallen kann.

Der vorrichtungsmäßige Teil der obigen Aufgabe wird gemäß der Erfindung dadurch gelöst, daß dem Kreiselpumpenaggregat ein Gleichrichterelement zugeordnet wird, das mindestens einem Teil einer Wicklung zeitweise parallel oder in Reihe schaltbar ist. Bei einer solchen Schaltungsanordnung hat sich überraschenderweise gezeigt, daß beim Einschalten des Gleichrichterelements, beispielsweise einer Diode, der Motor ein Anfahrdrehmoment erzeugt, das typischerweise mehr als doppelt so groß wie das übliche Anfahrdrehmoment ist. Dieses Drehmoment steht jedoch nicht, wie beim Stand der Technik, konstant an, sondern ändert sich periodisch, und zwar mit der Frequenz der dem Motor aufgeschalteten Energiequelle. Dabei ändert es nicht nur seine Größe, sondern auch seine Drehrichtung. Wird beispielsweise ein Kreiselpumpenaggregat ohne Frequenzumrichter, d.h. mit Netzfrequenz von üblicherweise 50 Hz betrieben, so ändert sich auch dieses Anfahrdrehmoment mit Netzfrequenz, je nach Anordnung des Gleichrichterelements jedoch phasenverschoben. Bei der erfindungsgemäßen Schaltung eines Gleichrichterelementes ändert sich zwar die Drehrichtung periodisch, doch bleibt das über die Zeit gemittelte Drehmoment (Mittelmoment) positiv, so daß der Rotor nicht nur vibriert, sondern in der Tat auch in der vorgesehenen Drehrichtung anläuft. Durch die erfindungsgemäße Lösung wird also ein erhöhtes Anfahrdrehmoment in Verbindung mit einem Rütteleffekt und einem sich dann in vorgesehene Drehrichtung versetzenden Rotor bewirkt, was für das Deblockieren besonders günstig ist.

Dieser erfindungsgemäße Effekt (Rütteleffekt unter gleichzeitigem Drehen des Rotors) kann nicht nur zum Deblockieren des Rotors genutzt werden, sondern, was in der Praxis ein sehr wesentlicher Aspekt sein wird, auch zur Bestimmung des Betriebszustandes (Drehen oder Stillstand). Wird nämlich während des Betriebs des Aggregats diese Schaltung aktiviert, so wird sich dann, wenn der Rotor bereits läuft, nur ein geringes Vibrieren bemerkbar machen. Sitzt der Rotor hingegen fest, so vibriert das Aggregat wesentlich heftiger. Hierdurch ist also ohne weiteres der Betriebszustand kontrollierbar, ohne daß weitere Hilfsmittel erforderlich sind. Diese Kontrollmöglichkeit ist vor allem für die Heizungstechnik wichtig, denn die heutigen Umwälzpumpen arbeiten so schwingungsarm und leise, daß es in der Praxis oftmals nur schwer möglich ist, festzustellen, ob das Aggregat läuft oder steht.

In einfachster Form kann als Gleichrichterelement eine Diode Verwendung finden, die kostengünstig verfügbar ist und beispielsweise über einen ohnehin vorhandenen Stufenschalter aktiviert werden kann.

Es ist zwar bekannt, bei Kreiselpumpenaggregaten höherer Leistung, die mittels Drehstrommotoren angetrieben werden, ein Gleichrichterelement mit einer Wicklung in Reihe zu schalten. Diese Lösung ist jedoch mit der erfindungsgemäßen nicht vergleichbar, sie dient ausschließlich zur Drehzahlsteuerung, insbesondere zur Drehzahlreduzierung.

Die vorliegende Erfindung kann mit einfachen Mitteln nicht nur bei Neukonstruktionen, sondern auch bei vorhandenen Kreiselpumpenaggregaten verwirklicht werden, indem ein Gleichrichterelement und ein Schalter beispielsweise im Klemmenkasten nachträglich integriert oder an diesem in einem gesonderten Gehäuse angebaut werden. Auch ist ein nachträglicher Einbau an anderer Stelle möglich, zum Beispiel durch Zwischenschaltung eines entsprechend ausgerüsteten Gerätes in die Versorgungsleitung des Pumpenaggregats.

Insbesondere bei modernen, frequenzumrichtergesteuerten Kreiselpumpenaggregaten erweist es sich als vorteilhaft, mit einem Schalter nicht nur das Gleichrichterelement zum Einleiten der Deblockierungsphase aktiv zu schalten, sondern gleichzeitig den Frequenzumformer auf eine für dieses Deblockieren besonders günstige Frequenz anzusteuern.

Die Erfindung ist nachfolgend anhand von in der Zeichnung dargestellten Ausführungsbeispielen erläutert. Es zeigen:

Figur 1      ein Schaltbild eines Einphasen-Induktionsmotors eines Kreiselpumpenaggregats mit Deblockierungseinrichtung,

Figur 2      eine andere Ausführung der Schaltung nach Figur 1,

Figur 3      den zeitlichen Drehmomentverlauf der Rotorwelle während der Deblockierungsphase,

Figur 4      einen Längsschnitt durch ein Kreiselpumpenaggregat gemäß der Erfindung,

Figur 5      den relativen magnetischen Fluß vor Rotor und Stator während einer Rotordrehung bei einem Kreiselpumpenaggregat ohne aktivierte Deblockierungseinrichtung und

Figur 6      den relativen magnetischen Fluß des Stators während einer Rotorumdrehung mit und ohne eingeschaltete Deblockierungseinrichtung.

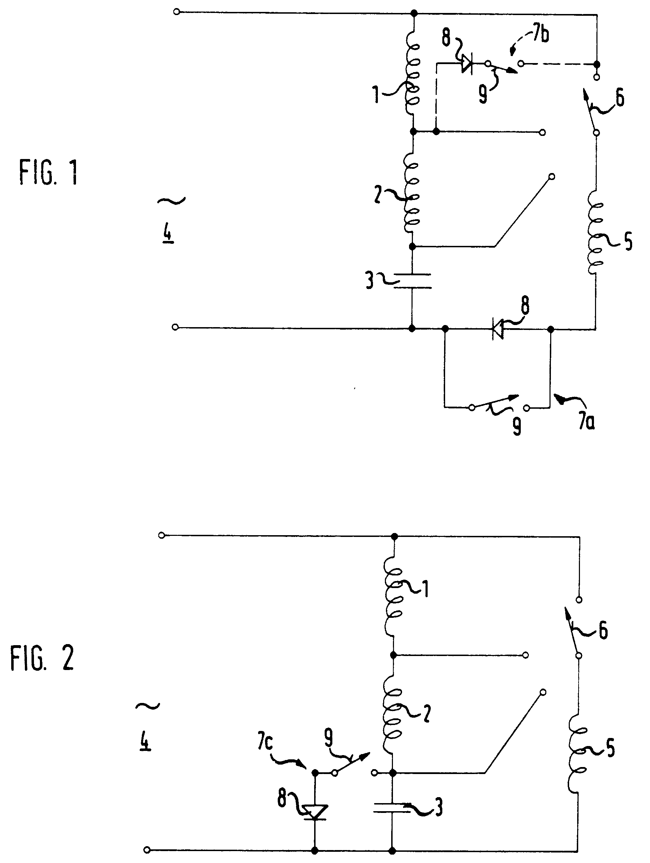

In Figur 1 ist das Schaltbild eines Einphasen-Induktionsmotors eines Kreiselpumpenaggregates mit Deblockierungseinrichtung dargestellt. Der Motor weist eine aus zwei Wicklungsteilen 1 und 2 bestehende Anlaufwicklung auf, die in Reihe mit einem Kondensator 3 am Netz 4 bestimmter Frequenz und Spannung anliegt. Es kann die Frequenz aber auch durch einen vorgeschalteten Frequenzumrichter veränderbar sein.

Weiterhin weist der Elektromotor eine Arbeitswicklung 5 auf, die in bekannter Weise parallel zur Anlaufwicklung 1, 2 geschaltet ist und ebenfalls am Netz 4 anliegt. Durch den Kondensator 3 arbeitet die Anlaufwicklung 1,2 gegenüber der Arbeitswicklung 5 phasenverschoben.

Wie aus Figur 1 ersichtlich ist, kann die Arbeitswicklung 5 über einen Stufenschalter 6 entweder parallel zur Anlaufwicklung 1, 2, parallel zum Wicklungsteil 2 der Anlaufwicklung oder parallel zum Kondensator 3 geschaltet werden. Diese Schaltungskombinationen sind an sich bekannt und im Bereich der hier in Rede stehenden Kreiselpumpenaggregate üblich, um auf einfache und kostengünstige Weise die Pumpe mit unterschiedlicher Leistung fahren zu können.

Die einleitend beschriebene Einrichtung zum Deblockieren des festsitzenden Rotors ist im Schaltbild mit 7a oder alternativ (in unterbrochenen Linien dargestellt) mit 7b gekennzeichnet. Diese Einrichtung besteht aus einem Gleichrichterelement 8 in Form einer Diode sowie einem Schalter 9, mit dem diese Diode zum Einleiten der Deblockierungsphase aktiv geschaltet wird.

Bei der Deblockierungseinrichtung 7a ist die Diode in Reihe mit der Arbeitswicklung 5 geschaltet. In der dargestellten Schalterstellung ist die Diode 8 aktiv, d.h., sie unterdrückt eine Halbwelle des durch die Arbeitswicklung 5 fließenden Wechselstroms. Durch Schließen des Schalters 9 wird die Deblockierungseinrichtung 7a ausgeschaltet, indem die Diode 8 überbrückt wird.

Eine alternative Ausführung der Einrichtung zum Deblockieren ist mit 7b bezeichnet. Dort ist die Diode 8 parallel zum Wicklungsteil 1 der Anlaufwicklung 1, 2 geschaltet. In der dargestellten Stellung ist die Einrichtung nicht aktiv. Erst mit Schließen des Schalters 9 wird die Diode 8 parallel zum Wicklungsteil 1 geschaltet, so daß eine Halbwelle des durch diesen Wicklungsteil 1 fließenden Wechselstroms durch Kurzschluß mittels der Diode 8 unterdrückt wird.

Bei dem in Figur 2 dargestellten Schaltbild ist eine weitere alternative Anordnung der dort mit 7c gekennzeichneten Einrichtung zum Deblockieren gezeigt. Wie sich aus diesem Schaltbild ergibt, das, soweit es den eigentlichen Motor betrifft, mit dem gemäß Figur 1 übereinstimmt, ist die Diode 8 über den Schalter 9 parallel zum Kondensator 3 schaltbar, wodurch die Deblockierungseinrichtung 7c aktiviert wird. In der dargestellten Schaltstellung ist sie inaktiv. Versuche haben gezeigt, daß mit einer Schaltungsanordnung gemäß Figur 2, bei der die Diode 8 parallel zum Kondensator 3 schaltbar ist, besonders gute Ergebnisse beim Deblockieren erreicht werden.

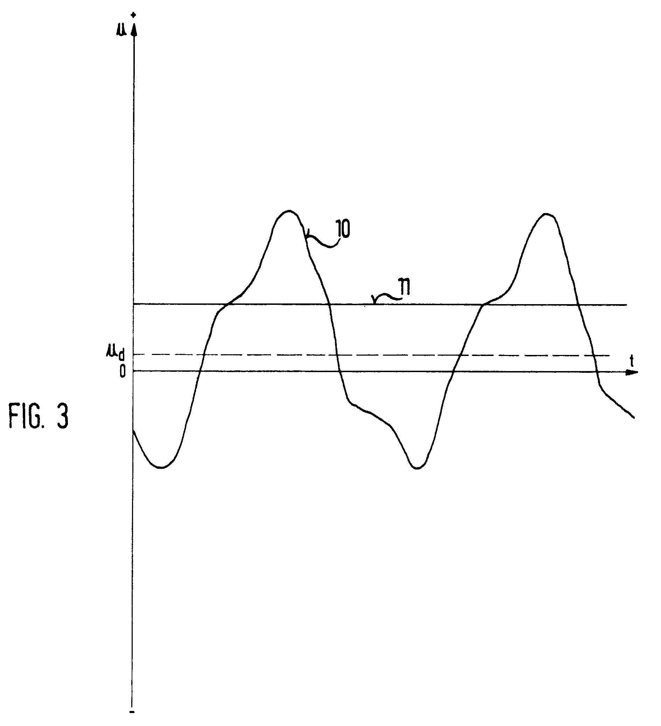

Allen Einrichtungen 7 gemeinsam ist, daß bei deren Aktivierung sich ein Momentenverlauf am Rotor ergibt, wie er in Figur 3 anhand der Kurve 10 schematisch dargestellt ist. Zum Vergleich ist in Figur 3 eine Kurve 11 eingezeichnet, die das Anfahrmoment desselben Motors ohne Einrichtung zum Deblockieren bzw. ohne Aktivierung dieser Schaltung zeigt. Der Vergleich der Kurven 10 und 11 verdeutlicht, daß durch die erfindungsgemäße Schaltung ein Anfahrdrehmoment des Rotors mit Spitzenwerten erreicht wird, die mehr als zweimal so groß wie das übliche Anfahrdrehmoment des Motors sind und zudem periodisch ihre Richtung ändern. Die Frequenz der Richtungsumkehr entspricht der Netzfrequenz, ggf. der Ausgangsfrequenz des speisenden Frequenzumrichters. Je nach Anordnung der Deblockierungseinrichtung weicht die Momentenkurve in der Deblockierungsphase von der (hier stark vereinfachten Darstellung) Sinusform sowohl in der Kurvenform als auch insbesondere in der Phase ab. Allen erfindungsgemäßen Einrichtungen ist weiterhin gemeinsam, daß bei der Aktivierung der Schaltung das über die Zeit gemittelte Drehmoment

$M_d$ stets positiv ist, so daß der Rotor in Drehung versetzt wird.

Anhand der Figuren 1 und 2 sind drei beispielhafte Anordnungen und Ausführungen solcher Einrichtungen zum Deblockieren dargestellt. Die Erfindung beschränkt sich jedoch nicht hierauf, das Gleichrichterelement 8 kann zum Zwecke des Deblockierens oder Feststellens des Betriebszustands (Laufen oder Stillstand) wahlweise parallel oder in Reihe zu einem oder mehreren der vorbeschriebenen Bauteile 1, 2, 3 und 5 geschaltet sein, um den anhand von Figur 3 dargestellten Effekt zu erreichen.

Die Anwendung dieses Deblockierungsverfahrens kann, wie einleitend beschrieben, in vielfältiger Weise erfolgen. Besonders kostengünstig wird eine Ausführung sein, bei der der Stufenschalter 6 und der Schalter 9 miteinander kombiniert sind, so daß bei Bedarf durch manuelle Schaltung die Deblockierungsphase oder die Zustandsprüfung eingeleitet wird. Auch kann der Schalter 9 mit einem Zeitglied und einer Selbsthaltung versehen sein. Dann kann die Einrichtung 7 bei jedem Einschalten des Aggregats aktiviert werden, sie bleibt nach dem Einschalten für die durch das Zeitglied vorbestimmte Zeit eingeschaltet. Diese Lösung bietet sich insbesondere beim Einsatz des Aggregats in automatisch gesteuerten Anlagen ein, da dann selbsttätig mit jedem Einschalten des Aggregats für ein Deblockieren des Rotors gesorgt wird, unabhängig davon ob dieser nun blockiert ist oder nicht.

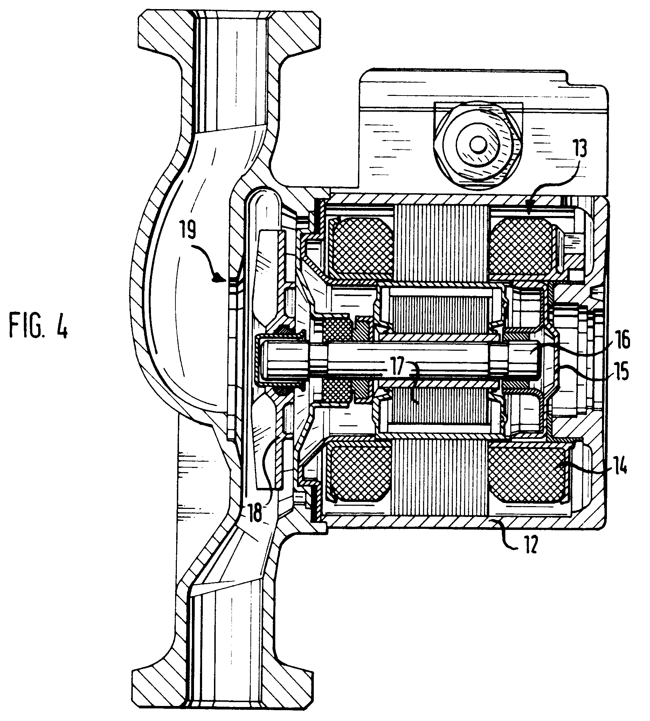

Figur 4 zeigt beispielhaft wie das Pumpenaggregat mit Einrichtung zum Deblockieren 7 konstruktiv ausgeführt sein kann.

Innerhalb eines Gehäuses 12 sitzt ein Einphasen-Induktionsmotor 13, dessen Ständerwicklung 14 durch einen Spaltrohrtopf 15 von dem im Pumpenraum anstehenden Fördermedium abgeschlossen ist. Der Spaltrohrtopf 15 ist an seinem Boden geschlossen ausgebildet, in ihm ist eine Welle 16 gelagert, die einerseits den Läufer 17 des Motors 13 trägt und andererseits am offenen Ende des Spaltrohrtopfes 15 das Kreiselrad 18 der Pumpe 19.

Dadurch, daß die Welle 16 im Falle des Deblockierens durch den Motor 13 mit einem erheblich erhöhten und seine Richtung ändernden Moment beaufschlagt wird, kann der Spaltrohrtopf 15 (sowie auch das Gehäuse 12 in diesem Bereich) geschlossen ausgebildet sein, da die Zugänglichkeit der Welle 16 ohne Demontage des Gehäuses 12 nicht mehr erforderlich ist.

Die anhand der vorbeschriebenen Ausführungsbeispiele dargestellten und beschriebenen Deblockierungseinrichtungen arbeiten mit einem Gleichrichterelement, wie es bei zahlreichen Anwendungen derzeit die kostengünstigste Lösung einer solcher Deblockierungseinrichtung sein dürfte. Die vorliegende Erfindung beschränkt sich jedoch keinesfalls auf ein solches Gleichrichterelement. Für die Deblockierung auf elektrischem Wege ist es vielmehr nur erforderlich, daß während der Deblockierungsphase mindestens ein Teil der Motorwicklung mit einer sich zeitlich ändernden Spannung beaufschlagt wird, deren während einer Schwingungsperiode (der Versorgungsspannung) gebildeter Mittelwert ungleich Null ist. Es gibt zahlreiche technische Lösungen, mit denen dies erreicht werden kann.

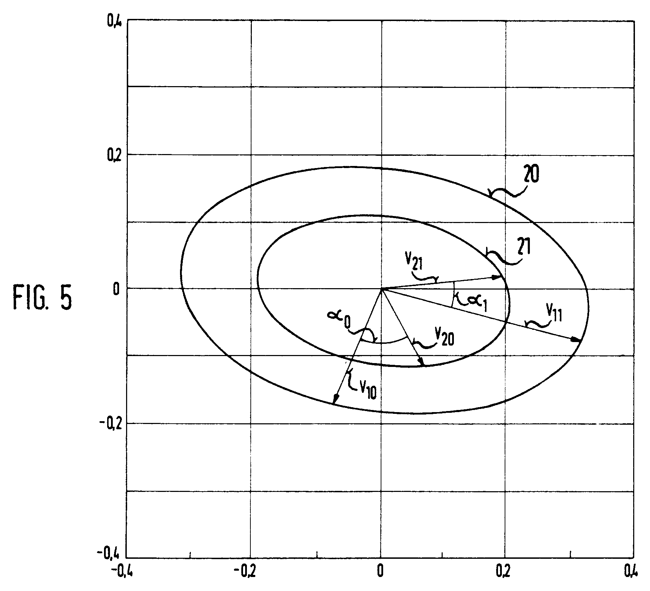

Beim normalen Motorbetrieb (auch in der Anlaufphase) ist der Mittelwert der den Motor beaufschlagenden Spannung stets Null. Dann ergibt sich ein relativer magnetischer Fluß innerhalb des Motors, wie er anhand von Figur 5 dargestellt ist. Dort ist mit 20 die Kurve des relativen Statorflusses während einer Motorumdrehung sowie mit 21 die des relativen Rotorflusses beziffert. In der Darstellung nach Figur 5 sind beispielhaft zwei Vektorpaare $v_{10}$, $v_{20}$ und $v_{11}$, $v_{21}$ dargestellt, die im Winkel $\alpha_0$ bzw. $\alpha_1$ zueinander stehen und entsprechend der Rotordrehung vom Nullpunkt längs der Kurven 20 bzw. 21 wandern. Es ist also ersichtlich, daß diese Vektorpaare während einer Rotorumdrehung sowohl ihre Länge als auch ihre Richtung und ihren Winkel zueinander ändern. Nun gilt aber näherungsweise für das sich im Motor einstellende Moment M folgende Beziehung

$$ M = \text{konst.} \cdot |\vec{v}_1| \cdot |\vec{v}_2| \cdot \sin \alpha = \text{konst.} \cdot |\vec{v}_1 \times \vec{v}_2| $$

Die Darstellung nach Figur 5 gilt für einen Einphaseninduktionsmotor, wenn die an den Wicklungen anliegenden Spannungen den Mittelwert Null (während einer Schwingungsperiode) ergeben.

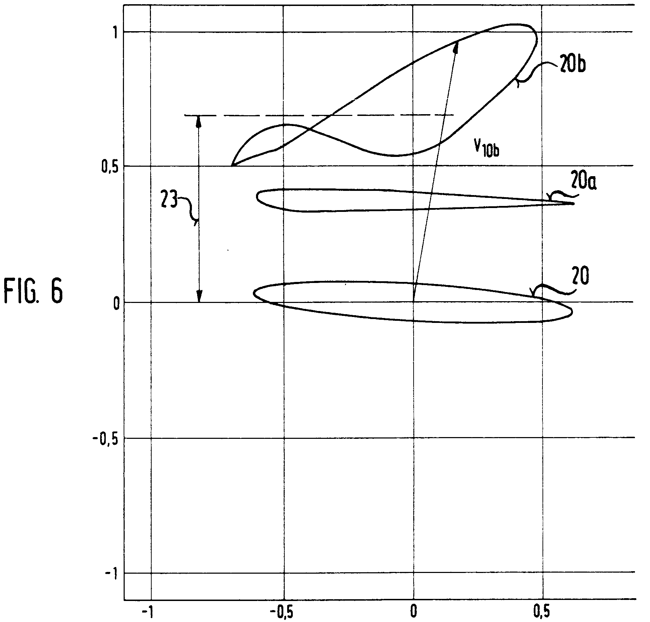

Wird die an einem Teil einer oder mehrerer Wicklungen anliegende Spannung auf einen zeitlichen Mittelwert ungleich Null eingestellt, dann verändert sich die zuvor elliptische Form der Kurve des relativen magnetischen Flusses wie dies beispielhaft anhand der Kurven 20a und 20b in Figur 6 dargestellt ist. Zum Vergleich ist in Figur 6 die Kurve 20 des relativen magnetischen Flusses des Stators aus Figur 5 dargestellt. Aus Gründen der besseren Übersicht sind die entsprechenden Rotorflußkurven in Figur 6 nicht dargestellt worden, diese verhalten sich jedoch sehr ähnlich wie die Statorflußkurven, weshalb auf diese Darstellung verzichtet wurde. Es ändert sich jedoch, wie Figur 6 zeigt, nicht nur die Kurvenform, die Kurve entfernt sich auch vom Koordinatennullpunkt. In der Kurve 20b ist beispielhaft ein Vektor $v_{10b}$ eingezeichnet. Der Abstand, mit dem sich die Kurve 20b von der Ursprungskurve 20 entfernt, ist in Figur 6 mit 23 angegeben. Dieser Abstand 23 ist eine Funktion des zeitlichen Mittelwertes der den Motor speisenden Versorgungsspannung $U_m$.

Läßt man ein Vektorpaar $v_{10}$, $v_{20}$ (wie in Figur 5 dargestellt) längs der Kurve 20b in Figur 6 wandern, so wird deutlich, daß die Länge der Vektoren gegenüber der Ursprungslage um das Zwei- bis Dreifache vergrößert worden ist. Hieraus resultiert letztlich die Drehmomentserhöhung während der Deblockierungsphase.

Jedoch wird, wie Figur 6 insbesondere die Kurve 20b verdeutlicht, nicht nur das Drehmoment vergrößert, auch der Winkel $\alpha$ ändert sich während eines Schwingungsintervalls der Versorgungsspannung, er ändert insbesondere auch sein Vorzeichen, weil der Drehpunkt des Vektorpaares außerhalb der Kurve liegt. Dieser Vorzeichenwechsel ist verantwortlich für den vorbeschriebenen Rütteleffekt.

Bezugszeichenliste

1        - Wicklungsteile der Anlaufwicklung
2        - Wicklungsteile der Anlaufwicklung
3        - Kondensator
4        - Netz
5        - Arbeitswicklung
6        - Stufenschalter
7a       - Einrichtung zum Deblockieren
7b       - Einrichtung (unterbrochene Linie)
7c       - Einrichtung Fig. 2
8        - Diode
9        - Schalter
10       - Kurve Erfindung
11       - Kurve St.d.T.
12       - Gehäuse
13       - Motor
14       - Ständerwicklung
15       - Spaltrohrtopf
16       - Welle
17       - Läufer
18       - Kreiselrad
19       - Pumpe
20       - Statorfluß
21       - Rotorfluß
23       - Abstand
$V_{10}$    - Stator bei $t_0$
$V_{20}$    - Rotor bei $t_0$
$V_{11}$    - Stator bei $t_1$
$V_{21}$    - Rotor bei $t_1$
$\alpha_0$       - Winkel bei $t_0$
$\alpha 1$       - Winkel bei $t_1$
$M_d$       - Mitteldrehmoment

**Patentansprüche**

1. Verfahren zum Deblockieren des Rotors eines Einphasen-Induktionsmotors eines Kreiselpumpenaggregates, dadurch gekennzeichnet, daß der Elektromotor während der Deblockierungsphase zur Erzeugung eines erhöhten und/oder in seiner Richtung sich ändernden Drehmoments elektrisch angesteuert wird.

2. Verfahren nach Anspruch 1, dadurch gekennzeichnet, daß während der Deblockierungsphase mindestens ein Teil der Motorwicklung mit einer sich zeitlich ändernden Spannung beaufschlagt wird, deren während einer Schwingungsperiode gebildeter Mittelwert ungleich Null ist.

6

3. Verfahren nach Anspruch 1 oder 2, dadurch gekennzeichnet, daß eine Halbwelle des mindestens einem Teil einer Motorwicklung zugeführten Wechselstroms zumindest zeitweise unterdrückt oder herausgefiltert wird.

4. Verfahren nach einem der vorhergehenden Ansprüche, dadurch gekennzeichnet, daß während der Deblockierungsphase in der Arbeits- und/oder Anlaufwicklung oder einem Teil der Wicklung ein Gleichrichterelement eingeschaltet wird.

5. Kreiselpumpenaggregat mit einem als Spaltrohrmotor ausgebildeten Einphasen-Induktionsmotor (13) mit mindestens einer Arbeitswicklung (5) und einer Anlaufwicklung (1,2), dadurch gekennzeichnet, daß ein Gleichrichterelement (8) mit mindestens einem Teil einer Wicklung (1, 2, 5) parallel oder in Reihe schaltbar ist.

6. Kreiselpumpenaggregat nach Anspruch 5, bei dem die Anlaufwicklung (1,2) durch eine Motorwicklung gebildet ist, der ein Kondensator (3) vorgeschaltet ist, dadurch gekennzeichnet, daß das Gleichrichterelement (8) parallel zum Kondensator (3) schaltbar ist.

7. Kreiselpumpenaggregat nach Anspruch 5 oder 6, dadurch gekennzeichnet, daß das Gleichrichterelement (8) eine Diode ist.

8. Kreiselpumpenaggregat nach einem der vorhergehenden Ansprüche, dadurch gekennzeichnet, daß das Gleichrichterelement (8) mit Einschalten des Aggregats für eine vorbestimmte Zeit aktiv geschaltet ist.

9. Kreiselpumpenaggregat nach einem der vorhergehenden Ansprüche, dadurch gekennzeichnet, daß das Gleichrichterelement (8) im Falle eines Blockierens des Rotors (16, 17, 18) für eine vorbestimmte Zeit selbsttätig aktiv geschaltet ist.

10. Kreiselpumpenaggregat nach einem der vorhergehenden Ansprüche, dadurch gekennzeichnet, daß das Gleichrichterelement (8) über eine externe Steuerung aktiv schaltbar ist.

11. Kreiselpumpenaggregat nach einem der vorhergehenden Ansprüche, dadurch gekennzeichnet, daß der Spaltrohrtopf (15) an seinem Boden geschlossen ausgebildet ist.

12. Kreiselpumpenaggregat nach einem der vorhergehenden Ansprüche, das über einen steuerbaren Frequenzumrichter gespeist wird, dadurch gekennzeichnet, daß zusammen mit der Aktivschaltung des Gleichrichterelementes (8) der Frequenzumrichter zur Abgabe einer für das Deblockieren bevorzugten und vorbestimmten Fequenz angesteuert wird.

13. Zusatzeinrichtung zum Nachrüsten eines Kreiselpumpenaggregates nach dem Oberbegriff einer der vorhergehenden Ansprüche, gekennzeichnet durch ein Gleichrichterelement und ein Schaltelement, mit dem dieses mit mindestens einem Teil einer Wicklung des Motors zum Zwecke des Deblockierens parallel oder in Reihe schaltbar ist.

FIG. 1

FIG. 2

FIG. 3

EP 0 555 701 A1

FIG. 4

10

FIG. 5

FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 047 906 (MATSUSHITA ELECTRONICS CORP) <br> * Seite 10, Absatz 2 -Absatz 3 * <br> --- | 1,5,12, 13 | H02P1/44 |
| A | GB-A-738 159 (THE GENERAL ELECTRIC COMP LTD) <br> * das ganze Dokument * <br> --- | 1,5,12 | |
| A | DE-A-3 105 444 (BIORI PUMPENBAU AG) <br> --- | 1,5,12 | |
| A | US-A-4 459 535 (H.P. SCHUTTEN ET AL) <br> * Zusammenfassung; Abbildung 1 * <br> --- | 12 | |
| A | DE-A-3 210 761 (GRUNDFOS A/S) <br> * Zusammenfassung; Abbildung 1 * <br><br> ----- | 5 | |

| | RECHERCHIERTE SACHGEBIETE (Int. Cl.5) |
|---|---|
| | H02P |

Der vorliegende Recherchenbericht wurde für alle Patentansprüche erstellt

| Recherchenort | Abschlußdatum der Recherche | Prüfer |
|---|---|---|
| DEN HAAG | 13 MAI 1993 | BEYER F. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..........................................................................
& : Mitglied der gleichen Patentfamilie, übereinstimmendes
    Dokument

EPO FORM 1503 03.82 (P0403)